# EUROPEAN PATENT APPLICATION

(11) **EP 1 382 868 A2**
(43) Date of publication of application: **21.01.2004**
(21) Application number: 03101724.7
(22) Date of filing: 12.06.2003
(51) Int. Cl.: F16C 33/76

(54) **Seal arrangement for ball bearing**

(30) Priority: 04.07.2002 SE 2020493
(71) Applicant: Aktiebolaget SKF, S-415 50 Gothenburg (SE)
(72) Inventor: Lindén, Hans, SE-442 94, Ytterby (SE); Oestling, Folke, SE-412 67, Göteborg (SE)
(74) Representative: Westman, Per Börje Ingemar

(57) **Abstract**

The present invention refers to a seal arrangement (10) for sealing off a slot (12) between first and second mutually movable bodies (14, 16), such as the rings of a bearing. The seal comprises a first and a second member (26, 28), the first member (26) being arranged on the first body (14) and the second member (28) being arranged on the second body (16), whereby a labyrinth-formed slit (38) is formed between the first and the second members (26, 28). Said slit (38) being filled with a semi-solid material having lubricating properties so that, upon rotation of one of the members, the material will slide along one of the members thereby forming a very thin labyrinth between said member and the material, which labyrinth substantially prevents passage of air, moisture and dirt.

## Description

### TECHNICAL FIELD

The present invention refers to a seal arrangement for sealing off an slot between first and second mutually movable bodies, such as the rings of a bearing, which seal comprises a first and a second member, the first member being arranged on the first body and the second member being arranged on the second body.

### BACKGROUND OF THE INVENTION

To prevent solid contamination and moisture from penetrating into a slot between first and second mutually movable bodies, such as for example the rings of a bearing, it is common to use different types of seals. The invention is not limited to use for sealing off bearings, but can be used for sealing off slots between many other sorts of machine parts, as the problems that have to be solved by the seals are normally the same irrespective of the type of the parts to be sealed off. However, in this paper, the invention will be described mostly in connection with bearings.

Thus, in the following, and with reference to common bearings, known seals will be very shortly described.

Seals which are used to seal off for example a bearing can be either of an integral type or an external type. An integral type seal is a seal provided to shield one or both axial ends of a bearing and is arranged directly on the bearing. This type of seal is often used for arrangements where a sufficiently effective external seal cannot be provided, for example because there is not enough space in the bearing arrangement.

In the external type seal, the seal is instead arranged at an appropriate place within a bearing arrangement, i.e. in a space in which one or several bearings is supported, but normally not directly on the bearing.

Furthermore, both integral seals and external seals for use in conjunction with bearings, particularly rolling bearings, can be of two types: non-contacting seals and contacting seals. A contacting seal is in contact with both the rotating and stationary components of the bearing or bearing arrangement and is usually provided with sealing lips or the like. On the other hand, a non-contacting seal is without contact between the rotating and the stationary components as there is provided a narrow gap between the components.

By these definitions, the seal of the invention is a contacting type of seal during the mounting and initial running phase and thereafter it becomes a non-contacting type of seal. However, the seal of the invention will only be referred to as a non-contacting type of seal and in the following a more detailed description of such a type of seal will be made.

As can be understood, the effectiveness of the non-contacting seal highly depends on the design of the narrow gap, as the gap, if not properly designed, can easily provide a passage for air, moisture and dirt from the surrounding environment to the bearing.

Thus, a successful way of forming an effective seal is to provide a gap that is greatly winding, i.e. a gap formed more or less as a labyrinth.

Such seals, called labyrinth seals, are common, effective and of the non-contacting type for both integral and external use. Normally, a labyrinth seal comprises two parts that are being provided with corresponding comb member formations or tongue formations, so that the formations on the first part intermesh with the formations of the second part forming only a narrow winding slit between them. Advantageously, a seal with such a narrow winding slit can be used in conjunction with bearings and bearing arrangements that is filled with lubrication such as for instance grease. Lubrication that is trying to escape from the interior of the bearing or bearing arrangement has difficulties passing through the winding slit as the rotation provided to one of the seal parts causes troublesome currents in many directions inside the slit.

An example of a known labyrinth seal filled with grease can be seen in the document DE 196 27 048. However, the described seal arrangement is very complex and is composed of as much as four different parts having comb like intermeshing formations. Such a seal is most likely very expensive to manufacture and time-consuming to mount. Further, the reliability against leakage of such a seal should be questioned, as the seal, by being formed of four parts, has a number of adjoining surfaces that will have to tightly cooperate with each other.

### OBJECTS OF THE INVENTION

Thus, an object of the present invention is to provide a seal arrangement for sealing off a slot between first and second mutually movable bodies, such as for example the rings of a bearing, which seal arrangement has the following advantages:
- is reliable,
- comprises few parts,
- reduces friction in the seal,
- prevents passage of air, dirt and moisture through the seal,
- prevents passage of lubrication out of the sealed off space,
- is easy to mount and dismount,
- is simple to manufacture,
- is cheap, and
- can be used either as an integral seal or an external seal.

These objects have been solved by providing a seal that comprises a first and a second member, the first member being arranged on the first body and the second member being arranged on the second body, whereby a labyrinth-formed slit is formed between the first and the second members, and said slit being filled with a semi-solid material having lubricating properties so that, upon moving of one of the members, the material will slide along one of the members thereby forming a very thin labyrinth between said member and the material, which labyrinth substantially prevents passage of air, moisture and dirt.

### BRIEF DESCRIPTION OF THE DRAWINGS

In the following, the invention will be more closely described with help of preferred embodiments and with reference to the drawings, in which:
Fig. 1 shows a partial view in cross section of a bearing provided with a seal arrangement according to a first preferred embodiment of the invention,
Fig. 2 shows a partial view in cross section of a bearing provided with a seal arrangement according to a second preferred embodiment of the invention,
Fig. 3 shows a perspective view of a 45° section of a seal according to the second embodiment,
Fig. 4 shows a partial view in cross section of a seal arrangement according to a third preferred embodiment of the invention, which third embodiment is used for sealing off a slot between two mutually movable bodies which move linearly in relation to each other,
Fig. 5 shows a partial view in cross section of a seal arrangement according to a fourth preferred embodiment of the invention, which fourth embodiment is used for sealing off a slot between two mutually movable bodies which, as with the bodies in the third embodiment, move linearly in relation to each other, and
Fig. 6 shows a partial view in cross section of a seal arrangement according to a fifth preferred embodiment of the invention illustrating a seal arrangement the components of which are interconnected with a snap-in connection.

### DESCRIPTION OF PREFERRED EMBODIMENTS

The seal arrangement of the present invention is preferably used for sealing off a slot between first and second mutually movable bodies.

The seal arrangement can be either of an internal type, which means that the seal arrangement for example could be used for sealing off a slot between the rings of a bearing, for example a rolling bearing, or of an external type, which means that the seal arrangement for example could be used for sealing off a slot between a rotatable spindle and a housing or mutually movable linear motion components.

In the following, the seal arrangement of the present invention will be closely described with help of five preferred embodiments. The first, second and fifth embodiments are examples of how the seal arrangement can be used for sealing off an annular slot between first and second concentric, mutually rotatable bodies, one arranged inside the other, such as the rings of a bearing. In connection with the third and the fourth embodiments, it will be described how the seal arrangement according to the invention can be used for sealing off a slot between first and second mutually, linearly movable bodies, such as for example two parts of a pneumatic cylinder or two parts of a coordinate table of a milling machine.

In the attached drawings, the seal arrangement as a whole has been given the reference number 10, and in the embodiments, the main parts will be denoted with the same reference numerals unless otherwise is indicated.

Firstly, according to the first and second embodiments, an ordinary rolling bearing is sealed off and the seal arrangement is provided in an annular slot 12 between two concentric and mutually rotatable bodies, a first body 14 and a second body 16. The first body 14, being the inner ring of the bearing, is arranged inside the second body 16, which second body 16 being the outer ring of the bearing. Thus, the annular slot 12 is formed between an outer, annular envelope surface 18 of the inner ring 14 of the bearing and an inner, annular envelope surface 20 of the outer ring 16 of the bearing.

Preferably, the seal arrangement 10 is arranged in the annular slot 12 substantially close to the axial end 22 of the bearing, on the outside of the rolling members 24 of the bearing.

The seal 10 comprises a first member 26 and a second member 28. In the preferred embodiments described herein, the first member 26 is arranged on the inner ring 14 of the bearing and the second member 28 is arranged on the outer ring 16 of the bearing. More specifically, the first member 26 is radially arranged on the outer envelope surface 18 of the inner ring 14 of the bearing. Further, the contact between the member 26 and the inner ring 14 is made tight so that passage of air, moisture and dirt is prevented. Similarly, the second member 28 is radially arranged on the inner envelope surface 20 of the outer ring 16 of the bearing, and the contact between the member 28 and the outer ring 16 is made tight so that passage of air, moisture and dirt is prevented. Furthermore, the first member 26 is preferably arranged outside the second member 28, i.e. the first member 26 is arranged substantially at, or in the vicinity of, the axial end 22 of the bearing and the second member 28 is arranged between the first member 26 and the rolling members 24 of the bearing. It should be understood that the invention is not limited to such an arrangement, instead the positions of the second member 28 and the first member 26 could for example be exchanged.

Moreover, the first and second members 26, 28 of the seal are positioned at an axial distance from each other. A suitable axial distance can be chosen depending on for example the type of embodiment or the desired sealing effect.

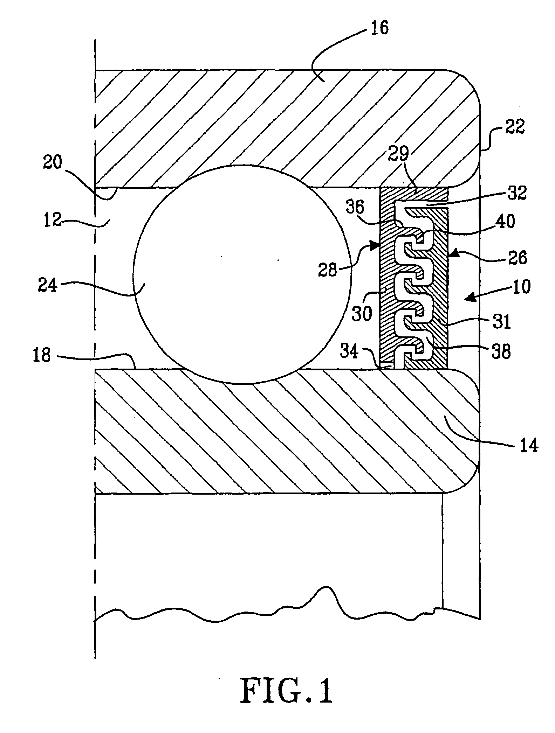

In the first preferred embodiment, illustrated in Fig. 1, the second member 28 of the seal is formed as a ring 29 arranged on the inner envelope surface 20 of the second body 16, i.e. the outer ring of the bearing. The ring 29 is sleeve-formed and provided with a radial flange 30, which flange 30 radially extends from the inner envelope surface 20 of the outer ring 16 of the bearing and substantially all the way to the outer envelope surface 18 of the inner ring 14 of the bearing leaving only a narrow gap 34 between a radial end surface of the flange and the outer envelope surface 18 of the inner ring 14 of the bearing. Preferably, the size of the gap 34 is chosen so that it suits the size of the bearing and the degree to which the bearing has to be sealed off. Generally, the relation between the bearing and its seal can be shortly described with: The larger gap, the poorer sealing effect.

Preferably, the flange 30 is planar and provided in the very end of the ring 29, which end is located nearest the rolling members 24 of the bearing. The second member 28 will then have an L-form, or more like a T-form if the flange 30 is displaced a distance from said end.

Further, the first member 26 is formed as an annular disc 31. The disc 31 extends radially from the outer envelope surface 18 of the inner ring 14 of the bearing and substantially all the way to the ring 29 of the second member 28 leaving only a narrow gap 32 between an inner envelope surface of the ring 29 and an outer envelope surface of the disc 31. As with the size of the gap 34, the size of the gap 32 is chosen so that it suits the size of the bearing and the degree to which the bearing has to be sealed off. Preferably, the disc 31 is planar.

On the axial surfaces that are facing towards each other, the first member 26 and the second member 28 are each provided with at least one annular, substantially axially extending tongue 36. Advantageously, to obtain an efficient seal, said tongues extend at least half the way to the opposite member, i.e. the tongue of the first member extends at least half the way to the axial end surface of the second member and the tongue of the second member extends at least half the way to the axial end surface of the first member. In the preferred example shown in Fig. 1, the tongues extend substantially 2/3 of the way to the opposite member. Further, the tongues are displaced a distance from each other so that the tongue 36 of the first member 26 is able to cooperate with that of the second member 28 and vice versa forming a labyrinth-formed slit 38 between them. The wording "cooperating" is here given the meaning of"intermeshing", as the tongues can be said to intermesh with each other.

To further increase the winding of the slit 38, substantially each axial tongue 36 could be provided with a radially extending tip 40 and preferably, the tip 40 of the tongue 36 of the first member 26 is facing the tip 40 of the tongue 36 of the second member 28.

As said, the number of tongues 36 is at least one on each member 26, 28, but the number can vary. Preferably, there are provided several tongues 36, as several tongues 36 provide a more winding, more labyrinth-formed slit 38. In the embodiment shown in Fig. 1, there is provided four and five tongues 36 respectively, but this is by no means an optimal number. Instead, each different application may require a different number of tongues 36 depending on for example the size of the annular slot 12 and the desired sealing effect.

Advantageously, there is provided a tongue, preferably without tip, at the radial end or near the radial end of the first member 26, see Fig. 1, so that the gap 32 is prolonged and forms a channel of substantially twice or more than twice the length of the original gap 32. Further, the other end of the first member, the end being in contact with the outer envelope surface 18 of the inner ring 14 of the bearing, is also provided with a tongue. Preferably, that tongue forms a sleeve-formed ring around the envelope surface 18 of the inner ring 14 of the bearing, and is provided with a tip directed, in radial direction, away from the inner ring 14 of the bearing forming a hinder in front of the gap 34.

Preferably, the first and second members 26, 28 of the seal according to the first embodiment are manufactured from for example polymeric material, sheet metal, brass or rubber. The manufacturing method is dependent on the type of material. Preferably, members of polymeric material and rubber can be manufactured by moulding and members of brass can be turned. Members of sheet metal can for instance be pressed.

Both the first and the second members 26, 28 are each fixedly connected to the respective envelope surfaces 18, 20 they are arranged on. This is made through for example interference fit, gluing or by snapping into for example a groove.

When the seal arrangement 10 according to Fig. 1 has been assembled and mounted in the bearing, the labyrinth-formed slit 38 is filled with a semi-solid material (not shown) having lubricating properties. In this paper, the word semi-solid means that the material is formable, and thus it can be made to fill up substantially every portion of the labyrinth-formed slit 38. Advantageously, the material can be injected into the labyrinth-formed slit 38 with for example a grease gun.

Today there are several semi-solid materials having lubricating properties present on the market that can be suitable for the seal of this invention. Such materials are for example a material marketed under the trade name "Solid Oil" which is a polymeric matrix saturated with a friction reducing substance, such as for example lubricating oil. The polymeric material used in Solid Oil has a porous structure with a large amount of micro pores that can absorb the oil by capillary force. Under influence of heat, pressure or adherence, generated at for instance a mutual rotation of two members, Solid Oil can slowly release the friction reducing substance and thereby lubricate the members.

It is to be understood that the invention is not restricted to use of Solid Oil. Instead any suitable semi-solid material having lubricating properties can be used, for instance polytetraflouroethylene (PTFE).

By filling the labyrinth-formed slit 38 with this semi-solid material, a very efficient seal is obtained as, upon rotation of one of the members 26, 28 of the seal, the material will slide at least along one of the members thereby forming a very thin labyrinth between said member and the material, which labyrinth substantially prevents passage of for instance air, moisture and dirt into the bearing. The labyrinth also prevents for instance lubricant that may be filled inside the bearing from finding its way out of the bearing.

As said, the semi-solid material will slide along one of the members of the seal. Either, the material will slide along the tongues 36 of the first member 26, or along the tongues 36 of the second member 28, or partly on each of the members 26, 28.

An additional advantage of the present invention is that the friction in the seal can be held at a low level. This is due to the fact that the semi-solid material filled in the labyrinth-formed slit 38 is able to reduce friction in the seal, as the semi-solid material has a property of releasing a friction reducing substance, such as for instance oil, under influence of the heat, pressure or adherence generated at the mutual rotation of the first and second members.

Which friction-reducing substance is released and at what temperature the release starts is of course highly dependent on the type of semi-solid material used and will not be further explained herein.

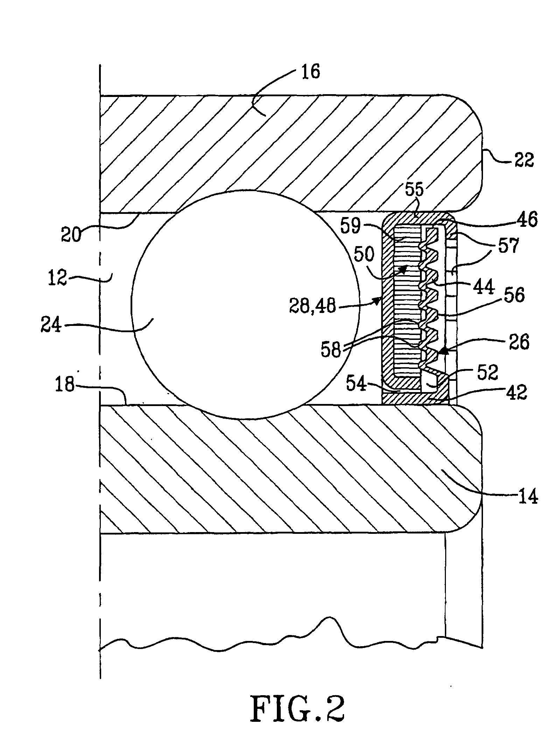

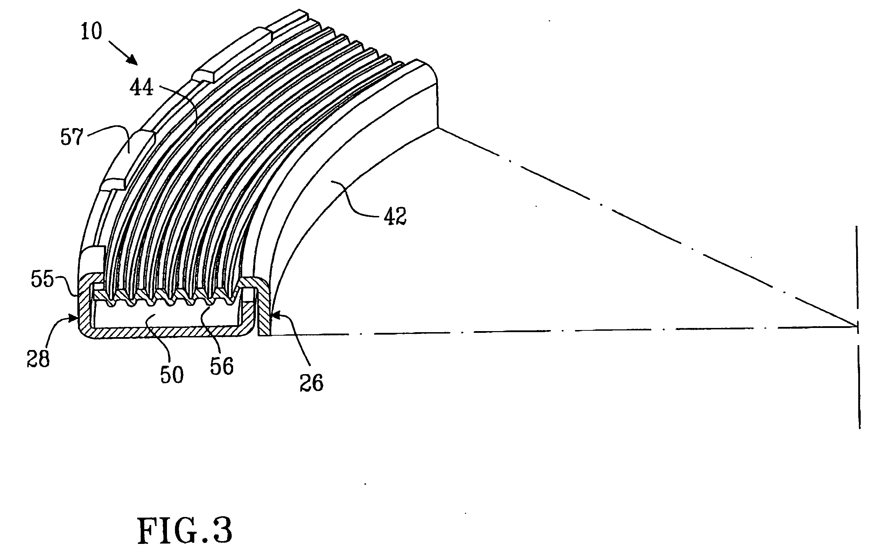

In the following, the second preferred embodiment will be described with reference to Fig. 2 and Fig. 3.

The seal arrangement according to the second embodiment differs from that of the first embodiment mainly in the design of the seal members 26 and 28.

In the second embodiment, the first member 26 is a ring 42 arranged on the outer envelope surface 18 of the inner ring 14 of the bearing. The ring 42 is sleeve-formed and is provided with a radial flange 44, which flange 44 extends from the ring 42 in direction from the outer envelope surface 18 of the inner ring 14 of the bearing and substantially all the way to a ring portion 55 of the second member 28, which will be more closely be described below, which ring portion 55 is provided to the inner envelope surface 20 of the outer ring 16 of the bearing, leaving only a narrow gap 46 between the ring portion 55 and a free end of the flange 44. As with the similar gaps 32, 34 in the first embodiment, the gap 46 is chosen so that it suits the size of the bearing and the degree to which the bearing has to be sealed off.

The second member 28 is a cup-shaped ring 48 radially arranged on the inner envelope surface 20 of the outer ring 16 of the bearing. The cup-shaped ring 48 has an open side, a cup-shaped portion 50, which is directed in the axial direction and is facing towards the radial flange 44 of the first member 26. Further, the cup-shaped ring 48 is positioned in the vicinity of the flange 44 of the first member 26 in the axial direction leaving a slit 52 between them, and the cup-shaped ring 48 is extending radially from the inner envelope surface 20 of the outer ring 16 of the bearing substantially all the way to the ring 42 of the first member 26, leaving only a narrow gap 54. Thus, an axial gap 54 is formed between an inner envelope surface of the cup-shaped ring 48 and an outer envelope surface of the ring 42 of the first member 26. Further, a radial slit 52 is formed between a side surface of the flange 44 and an imagined axial end surface, an imagined "lid", over the cup-shaped portion 50.

The cup-shaped ring 48 has a ring portion 55 in contact with the inner envelope surface 20 of the second body 16. This ring portion 55 has a free end that extends beyond the flange 44 of the first member 26 in the axial direction. Preferably, the free end of the ring portion 55 is provided with radially extending lips 57 directed inwards the slot, which lips 57 during assembling of the seal can be folded or bended over the flange 44. Preferably, the lips 57 are substantially equally distributed over the circumference of the ring portion and in the preferred example shown, the number of lips 57 is twenty, but this is by no means an optimal number. Instead, each different application may require a different number of lips 57 depending on for example the size of the seal. This is easily understood when the function of the lips 57 is explained: the second member 28 is provided with the lips 57 in order to prevent the seal, i.e. the first and second members 26, 28, from falling apart during for instance handling and transportation. For the purpose of preventing the seal from falling apart, the lips might as well be formed as a continuous lip that extends along the whole circumference. However, a disadvantage with such a design is that for instance water or other contaminations that the seal might be exposed to during operation or during for instance transportation have troubles finding its way out of the seal and is likely to stay under the lip. Instead, by using several small lips 57 with openings between, the seal is provided with "automatic drainage" of water or other contaminations, as such can follow the lips and leak out through the openings. Alternatively, if using a continuous lip, it may be provided with for example drainage holes.

The flange 44 of the first member 26 is provided with at least one wavelike, annular corrugation 56 facing the cup-shaped portion 50 so that peaks 58 of the corrugation 56 are extending a distance inside the cup-shaped portion 50. The number of peaks 58 of the wavelike, annular corrugation 56 can vary. Advantageously, there are provided a large number of peaks 58, as the peaks 58 provide a more winding, more labyrinth-formed slit 52. In the embodiment shown in Fig. 2, there is provided seven peaks 58, although seven peaks 58 are not necessarily an optimal number that can be used in all applications. Instead, each different application may require a different number of peaks 58 depending on for example the size of the annular slot 12 and the desired sealing effect.

The invention is not limited to use of a corrugated flange 44, instead it is possible to provide the flange with one or several peaks 58 only on the side surface facing towards the cup-shaped ring 48. The flange side surface facing away from the cup-shaped ring 48 can then be smooth. Similar to the corrugation 56, there are preferably provided a large number of peaks 58, as the peaks 58 provide a more winding, more labyrinth-formed slit 52.

Preferably, the peaks 58 have a rounded form, but it should be understood that the peaks 58 can have another suitable form.

Advantageously, the first and second members 26, 28 of the seal according to the second embodiment are manufactured from polymeric material, sheet metal, brass or rubber. The manufacturing method is dependent on the type of material. Preferably, members of polymeric material and rubber can be manufactured by moulding and members of brass can be turned. Members of sheet metal can be manufactured by for instance pressing.

As in the first preferred embodiment, both the first and the second members 26, 28 are each fixedly connected to the respective envelope surfaces 18, 20 they are arranged on. This is made through for example interference fit, gluing or by snapping into for example a groove.

Before mounting of the seal 10 in the bearing, the cup-shaped portion 50 of the second member 28 is firstly filled with a semi-solid material 59 having lubricating properties. The semi-solid material has been closely described in connection with the first preferred embodiment, and it will be understood that a similar semi-solid material can be used in the second preferred embodiment.

Substantially the whole of the cup-shaped portion 50 is filled with the semi-solid material 59, i.e. the semi-solid material 59 is filled up to the imagined axial end surface, the imagined "lid", of the cup-shaped portion 50, see Fig. 2.

Secondly, the first and second members 26, 28 are put together by folding the lips 57 of the second member 28 over the flange 44 of the first member 26. The seal 10 is then pressed into the annular slot 12 of the bearing. When pressing, the axial pressing force is preferably exerted on the lips 57 and on the ring 42 of the first member 26.

When mounting, it is important to see to that the flange 44 of the first member 26 is suitably biased/preloaded against the semi-solid material 59 so that the peaks 58 are capable of correctly digging their way down into the semi-solid material 59 when the bearing is set in motion.

A first preferred way of controlling the preload of the flange 44 is to slightly preload the flange 44 in direction towards the cup-shaped portion 50. The preload is effected by allowing the flange to be bent backwards at mounting of the two members 26, 28 thereby bending the flange 44 so that the angle between the ring and the flange is a few degrees less than 90°, preferably about 3-7° less. The peaks positioned near the free end of the flange 44 will then be initially positioned in the semi-solid material 59, whilst the peaks 58 in the other end are not initially positioned in the semi-solid material 59. When the bearing is set in motion, the biasing force in the flange 44 decreases as the peaks 58 of the flange 44 one by one digs its way down into the semi-solid material 59. If the flange 44 is not biased, there is a risk that the peaks 58 will not dig their way down into the semi-solid material 59.

A second preferred way of biasing/preloading the flange 44 is to provide a pressure onto the flange 44 with help of for example air or gas or other mediums that can be pressurized.

The efficient labyrinth of the slit 52 is thus formed when the wavelike, annular corrugation 56 of the flange 44 forms a corresponding wavelike, annular corrugation 56 in the semi-solid material 59 upon rotation of one of the members 26, 28. The semi-solid material 59 will then slide along one of the members thereby forming a very thin labyrinth between said member and the material 59, which labyrinth substantially prevents passage of air, moisture and dirt into the bearing. The labyrinth also prevents for instance lubricant that may be filled inside the bearing from finding its way out of the bearing.

Most likely, the material 59 will slide along the wavelike corrugation 56 in this embodiment.

Similarly, if the flange 44 is provided with one or several peaks 58 on only one side surface, the at least one peak 58 on the flange 44 of the first member 26 forms a recess in the semi-solid material 59 corresponding to the peak 58 upon rotation of one of the members. The material will then slide along one of the members thereby forming a very thin labyrinth between said member and the material, which labyrinth substantially prevents passage of air, moisture and dirt into the bearing.

As described in connection with the first embodiment, an additional advantage of the present invention is that the friction in the seal 10 can be held at a low level. This is due to the fact that the semi-solid material 59 filled in the cup-shaped portion 50 is able to reduce friction in the seal, as the semi-solid material 59 has a property of releasing a friction reducing substance, such as for instance oil, under influence of the heat generated at the mutual rotation of the first and second members 26, 28.

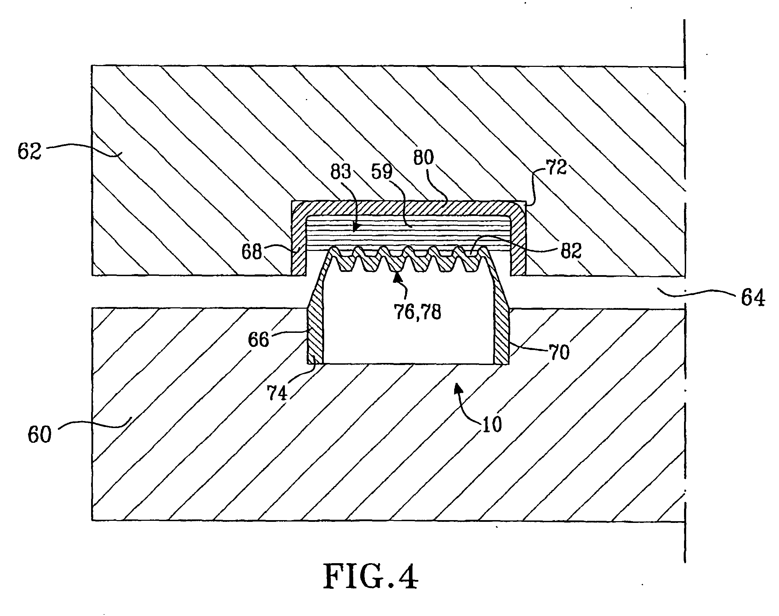

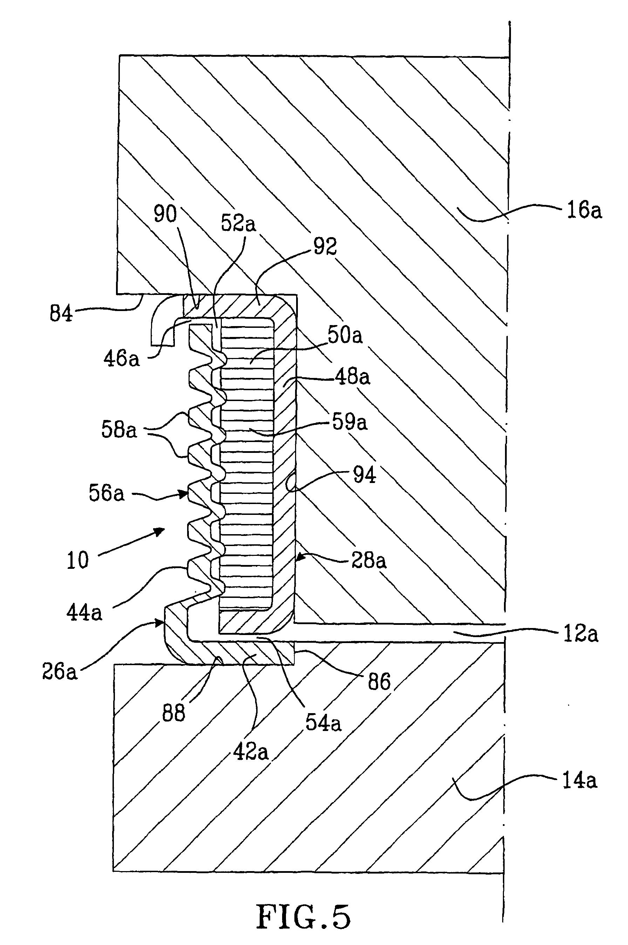

As said, the seal arrangement is not limited to use for sealing off an annular slot between first and second concentric, mutually rotatable bodies, one arranged inside the other, such as for example the rings of a bearing. The seal arrangement is also suitable for use when sealing off a slot between first and second mutually movable bodies, where the movement can for example be a linear motion. Such applications will now be described with reference to Fig. 4, which shows a third embodiment of the invention, and to Fig. 5, which shows a fourth embodiment of the invention. As can be seen, both the third and fourth embodiments are somewhat similar to the second embodiment. However, similar parts will not be denoted with the same reference numerals in the third embodiment.

The seal arrangement according to the third embodiment can be said to be a linear variant of the second embodiment, and is preferably used when sealing off a slot between a first body and a second body, where at least one of the bodies move with a linear motion in relation to the other. In Fig. 4 is shown a first body denoted 60 and a second body denoted 62 which is positioned so as to form a slot 64 between them. The first and second bodies 60, 62 can for example be parts of a pneumatic cylinder or a coordinate table of a milling machine, and in the example shown in Fig. 4, the mutual linear movement is made in a direction substantially perpendicular to the plane of the paper, i.e. a direction "into" or "out from" the paper. Generally, and in the described embodiment, the first and second bodies 60, 62 are positioned substantially in parallel with each other forming a straight slot 64 along the longitudinal extension (not shown) of the bodies 60, 62. Similarly, the seal arrangement 10 is aligned to the longitudinal extension of the first and second bodies 60, 62, and is adapted to follow the linear movement between them. Thus, the seal arrangement 10 comprises a first member 66 attached to the first body 60 and a second member 68 attached to the second body 62.

Preferably, the members 66, 68 are attached to the bodies 60, 62 in that they are adapted to be positioned in grooves along the linear slot 64. For this purpose, the first body 60 is being provided with a groove 70 in a surface facing the second body 62, in which groove 70 the first member 66 of the seal 10 is positioned, and likewise the second body 62 is being provided with a groove 72 in a surface facing the first body 60, in which groove 72 the second member 62 of the seal 10 is positioned. Preferably, the grooves 70, 72 and the members 66, 68 have such dimensions in relation to each other that the members 66, 68 can be pressed into the grooves 70, 72 and stay there thanks to a tight fit.

Advantageously, the first member 66 of the seal 10 is a profile element 74 having a form substantially similar to a U, although with a straight middle portion 76 between the two legs. This U-profile 74 is adapted to be pressed into the groove 70 with its legs first, and preferably the member 66 is manufactured from a material being slightly flexible so that the legs, during mounting, can be pressed into the groove 70 and after mounting exert a pressure on the side surfaces of the groove 70 thereby providing a tight fit between the first member 66 and the first body 60.

In this embodiment, the legs of the U-profile 74 is longer than the depth of the groove 70 and thus they extend a distance out from the first body 60 and towards the second body 62 with the second seal member 68. The middle portion 76 of the U-profile 74, i.e. the surface facing the second member 68 of the seal, is therefore positioned a distance inside the groove 72 of the second body 62, and is provided with a wavelike corrugation 78 similar to that of the second embodiment (for a closer description of the corrugation, see the second embodiment).

Preferably, the portions of the legs extending out of the groove 70 are inclined inwards forming a middle portion 76 that is shorter than the actual width of the groove 70.

The first member 66 can be designed in alternative ways: Similar to the second embodiment, the corrugation 78 can be exchanged for at least one outwardly directed peak, preferably several peaks. Further, the U-profile 74 can be exchanged for a solid block having inclined side surfaces and a surface facing the second member of the seal provided with at least one peak.

The second member 68 of the seal 10 is also a profile element 80 with a U-form and similarly it is pressed into the groove 72 of the second body 62, but with the open portion of the U-profile 80 facing towards the U-profile 74 of the first member 66, and as the U-profile 74 of the first member 66 extends a distance into the U-profile 80 of the second member 68, a slit 82 is formed between the first and the second members 66, 68.

With reference to the description of the second embodiment, the second member 68 is filled with a semi-solid material 83 in the opening of the U-profile 80. The opening is filled to such an extent that the wavelike corrugation 78 or the peaks comes into contact semi-solid material 83 and upon moving of one of the members 66, 68, forms a corresponding corrugation or recess in the semi-solid material 83. The material 83 will then slide along one of the members thereby forming a very thin labyrinth between said member and the material 83, which labyrinth substantially prevents passage of air, moisture and dirt through the linear slot 64. And as mentioned above, the semi-solid material 83 filled in the labyrinth-formed slit 82 has a property of releasing a friction reducing substance under influence of the heat, pressure or adherence generated at the mutual rotation of the first and second members 66, 68.

Advantageously, the first and second members 66, 68 of the seal according to the third embodiment are manufactured from polymeric material, sheet metal, brass or rubber. The manufacturing method is dependent on the type of material. Preferably, members of polymeric material and rubber can be manufactured by moulding and members of brass can be turned. Members of sheet metal can be manufactured by for instance pressing.

During manufacturing, the opening of the U-profile 80 of the second member 68 is filled with semi-solid material 83.

When mounting, the first member 66 of the seal 10 is attached to the first body 60 and the second member 68 of the seal 10 is attached to the second body 62. As said before, both the first and the second members 66, 68 are made fixedly connected to the respective grooves 70, 72 provided on the respective body 60, 62. As has been described, this is preferably made through for example interference fit. An alternative way of attaching the members in their proper place is to glue with an adhesive substance. An additional alternative is to use screw joints with suitable screws. However, it is important to see to that the peaks or the peaks of the wavelike corrugation 78 of the first member 66 are suitably preloaded against the semi-solid material 83 so that the peaks are capable of correctly digging their way down into the semi-solid material 83 when one or both bodies 60, 62 are set in motion. A suitable preload or biasing force can be provided by for example changing the size of the slot 64. If the seal arrangement 10 is not biased, there is a risk that the peaks will not successfully dig their way down into the semi-solid material 83, leading to a less labyrinth-formed slit 82 and thereby to a less effective seal arrangement 10.

The third embodiment has now been shortly described and it should be understood that any additional information, such as for example about the semi-solid material or the function of the seal arrangement, can be retrieved from the description of the second embodiment.

In the following, and with reference to Fig. 5, a fourth embodiment of the invention will be shortly described. The fourth embodiment is a linear variant of the second embodiment and as can be seen from the drawings the seal arrangement of the fourth embodiment has the same cross section as that of the second embodiment, although the seal arrangement of the fourth embodiment is of course linear instead of annular. Therefore, when describing the fourth embodiment, some of the reference numerals used for the second embodiment will be used, but supplemented by an "a" to separate them. Thus, the first and second bodies will be denoted 14a and 16a in this embodiment.

The difference between the two embodiments, besides the fact that the movement is linear, is the application and the mounting, and therefore the seal arrangement as such will only be briefly explained and it should be understood that all details of the seal arrangement can be retrieved from the description of the second embodiment.

As in the third embodiment, the direction of movement between the first and second bodies 14a, 16a is perpendicular to the plane of the paper, i.e. "into" or "out from" the paper, and the extension of the slot 12a to be sealed off is aligned with the direction of the movement.

The slot 12a to be sealed off is small in relation to the seal arrangement 10 and the seal arrangement 10 is positioned in a recess 84 bridging the first and second bodies 14a, 16a and extending along the longitudinal direction of the slot 12a.

The first member 26a of the seal comprises a base portion 42a in the form of a plate, which base portion 42a substantially in a first end is provided with a flange 44a directed substantially perpendicular to the base portion 42a. Similar to the flange 44 in the second embodiment, the flange 44a in this fourth embodiment is provided with at least one peak or a wavelike corrugation 56a with peaks 58a.

Further, the first member 26a of the seal is attached to the first body 14a. This is made with help of a shoulder-portion 86 in the first body 14a near the slot 12a. This shoulder-portion 86 arises as a result of the recess 84 made in the first and second bodies 14a, 16a and a second end surface of the base portion 42a of the first member 26a is arranged so that it is in contact with the shoulder-portion 86. Preferably, the shoulder-portion 86 has a height similar to the thickness of the base portion 42a, so that an upper side of the base portion 42a is substantially horizontally aligned with the slot 12a and a lower surface of the base portion 42a is supported by a recess surface 88 of the first body 14a. Moreover, the flange 44a provided on the base portion 42a extends almost all the way to a recess surface 90 of the second body 16a, which recess surface 90 being substantially parallel with the recess surface 88 of the first body 14a, leaving only a narrow gap 46a.

The second member 28a of the seal comprises an elongated cup-shaped element 48a which is supported by two surfaces in the recess 84 of the second body 16a. A base portion 92 of the elongated cup-shaped element 48a is in contact with the earlier mentioned recess surface 90 in the second body 16a and a cup-shaped portion 50a of the elongated cup-shaped element 48a is in contact with a recess surface 94 of the second body 16a being substantially perpendicular to the two earlier mentioned recess surfaces 88, 90.

Thus, the elongated cup-shaped element 48a is arranged between the flange 44a of the first member 26a and the recess surface 94 of the second body 16a. Further, the cup-shaped portion 50a of the second member 28a extends almost all the way to the base portion 42a of the first member 26a, leaving only a narrow gap 54a which is aligned with the slot 12a. Furthermore, the gap 46a is narrowed, as the cup-shaped element 48a will be positioned between the flange 44a of the first member 26a and the recess surface 90 of the second body 16a.

Like the second embodiment, a slit 52a is formed between the flange 44a of the first member 26a and the cup-shaped portion 50a of the second member 28a, which cup-shaped portion 50a is filled with semi-solid material 59a.

As can be understood, the mounting of the first and second members 26a, 28a of this fourth embodiment is somewhat different from that of the second embodiment as they cannot be fixedly attached to their respective first and second bodies 14a, 16a by for example interference fit. Instead, the first and second members 26a, 28a are preferably glued or screwed.

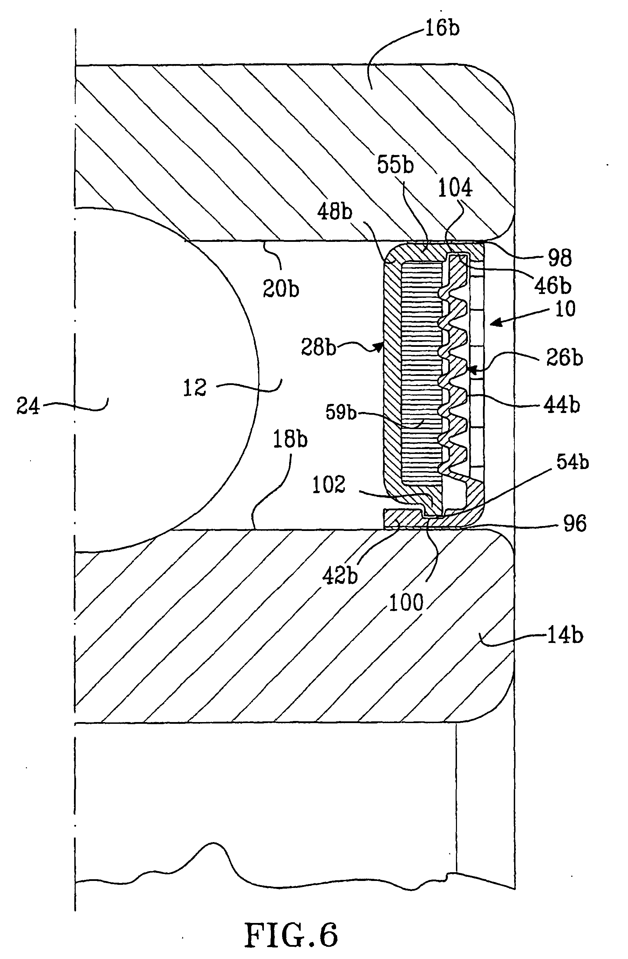

In Fig. 6 a fifth embodiment of the invention is shown illustrating a seal arrangement the components of which are interconnected with a snap-in connection. The seal arrangement is basically the same as in the second embodiment with two modifications, a reinforcement and a snap-in connection, that will be described in the following. Therefore, when describing the fifth embodiment, some of the reference numerals used for the second embodiment will be used, but supplemented by a "b" to separate them.

When the first and second members 26b, 28b of the seal are manufactured from for example polymeric material, which is usually less rigid than for example steel, the members 26b, 28b may need to be reinforced to work satisfactorily. One way to solve the reinforcement is to provide the first and second members 26b, 28b with sleeves of for example steel or other rigid material.

The first member 26b of the seal is provided with a sleeve 96 on the inner envelope surface of the ring 42b, which sleeve 96 after mounting in the bearing will be in contact with the outer envelope surface 18b of the first body 14b. Similarly, the second member 28b of the seal is provided with a sleeve 98 on the outer envelope surface of the cup-shaped ring 48b, which sleeve 98 after mounting will be in contact with the inner envelope surface 20b of the second body 16b.

Preferably, the sleeve 96, 98 is attached to the respective member 26b, 28b by for instance gluing, interference fit or bonding. For example, the sleeve envelope surface, which is to be connected to the seal member, can be buffed and thereafter placed in an injection moulding machine, so that the seal member, being formed in polymeric material, is built directly onto the sleeve with a sufficient adhesion between the sleeve and the seal member. illustrating a seal arrangement the components of which are interconnected with a snap-in connection.

The other modification concerns a way of facilitating mounting and handling of the seal arrangement, when manufactured in for example polymeric material, by interconnecting the components of the seal arrangement with a snap-in connection. By snapping together the first and second members 26b, 28b of the seal, during transportation of the seal there is a less risk that the members 26b, 28b will fall apart.

Advantageously, the snap-in connection can be obtained by providing the first member 26b with a groove 100 in the ring 42b on the surface facing the cup-shaped ring 48b of the second member 28b and by providing a protrusion 102 corresponding to the groove 100 on the inner surface of the cup-shaped ring 48b of the second member 28b. The protrusion 102 should be slightly smaller in dimension than the groove 100 so that the gap 54b is maintained, although in a more narrow state than before, when the protrusion 102 is snapped into the groove 100.

Similarly, a groove 104 is provided in the ring portion 55b of the second member 28b on the surface facing towards the flange 44b of the first member 26b and the flange 44b is prolonged so that it extends into the groove 104.

Although the present invention has been described with respect to its preferred embodiments, it is to be understood that various modifications and changes may be made without departing from the object and the scope of the invention as defined in the appended claims.

### LIST OF REFERENCE NUMERALS

### (except for the numerals supplemented with the letter a and b)

- 10: seal arrangement
- 12: annular slot
- 14: first body
- 16: second body
- 18: outer envelope surface
- 20: inner envelope surface
- 22: axial end of bearing
- 24: rolling member
- 26: first member of seal
- 28: second member of seal

- 29: ring
- 30: radial flange
- 31: annular disc
- 32: gap
- 34: gap
- 36: tongue
- 38: slit
- 40: tip

- 42: ring
- 44: flange
- 46: gap
- 48: cup-shaped ring
- 50: cup-shaped portion
- 52: slit it
- 54: gap
- 55: ring portion
- 56: corrugation
- 57: tip
- 58: peaks
- 59: semi-solid material

- 60: first body
- 62: second body
- 64: linear slot
- 66: first member
- 68: second member

- 70: groove
- 72: groove
- 74: U-profile/U-form
- 76: middle portion
- 78: wavelike corrugation
- 80: U-profile/U-form
- 82: slit
- 83: semi-solid material

- 84: recess
- 86: shoulder-portion
- 88: recess surface
- 90: recess surface
- 92: base portion
- 94: recess surface

- 96: sleeve
- 98: sleeve
- 100: groove
- 102: protrusion
- 104: groove

## Claims

1. Seal arrangement (10) for sealing off a slot (12; 12a; 64) between first and second mutually movable bodies (14; 14a; 14b; 60, 16; 16a; 16b; 62), such as the rings of a bearing, which seal comprises a first and a second member (26; 26a; 26b; 66, 28; 28a; 28b; 68), the first member (26; 26a; 26b; 66) being arranged on the first body (14; 14a; 14b; 60) and the second member (28; 28a; 28b; 68) being arranged on the second body (16; 16a; 16b; 62), whereby a labyrinth-formed slit (38; 52; 52a; 82) is formed between the first and the second members (26; 26a; 26b, 28; 28a; 28b), and said slit (38; 52; 52a; 82) being filled with a semi-solid material (59; 59a; 83) having lubricating properties so that, upon moving of one of the members, the material (59; 59a; 83) will slide along one of the members thereby forming a very thin labyrinth between said member and the material, which labyrinth substantially prevents passage of air, moisture and dirt.

2. Seal arrangement (10) according to claim 1, whereby the first and second bodies (14; 14b, 16; 16b) being arranged one inside the other and being concentric and mutually rotatable forming a slot (12b) being annular.

3. Seal arrangement (10) according to claim 2, whereby the first body (14; 14b) is arranged inside the second body (16; 16b) so that the annular slot (12; 12b) is formed between an outer, annular envelope surface (18; 18b) of the first body (14; 14b) and an inner, annular envelope surface (20; 20b) of the second body (16; 16b) and whereby the first member (26; 26b) is radially arranged on the outer envelope surface (18; 18b) of the first body (14; 14b) and the second member (28; 28b) is radially arranged on the inner envelope surface (20; 20b) of the second body (16; 16b).

4. Seal arrangement (10) according to claim 3, whereby the first and second members (26; 26b, 28; 28b) of the seal are positioned at an axial distance from each other.

5. Seal arrangement (10) according to claim 3, whereby the second member (28) is a ring (29) arranged on the inner envelope surface (20) of the second body (16), which ring (29) is provided with a radial flange (30), which flange (30) extends from the inner envelope surface (20) of the second body (16) and substantially all the way to the outer envelope surface (18) of the first body (14) leaving only a narrow gap (34).

6. Seal arrangement (10) according to claim 3, whereby the first member (26) is formed as an annular disc (31) radially extending from the outer envelope surface (18) of the first body (14) substantially all the way to the ring (29) of the second member (28), leaving only a narrow gap (32).

7. Seal arrangement (10) according to claim 6, whereby the annular disc (31) is positioned in the vicinity of the radial flange (30) of the second member (28) in the axial direction leaving a slit (38) between them.

8. Seal arrangement (10) according to claim 7, whereby the first member (26) and the second member (28), on the axial surfaces facing towards each other, are each provided with at least one substantially axially extending tongue (36) and whereby the tongue (36) of the first member (26) is cooperating with that of the second member (28) forming a labyrinth-formed slit (38) between them.

9. Seal arrangement (10) according to claim 8, whereby the axial tongue (36) is provided with a radially extending tip (40), and whereby the tip (40) of the tongue (36) of the first member (26) is facing the tip (40) of the tongue (36) of the second member (28).

10. Seal arrangement (10) according to claim 3, whereby the first member (26; 26b) is a ring (42; 42b) arranged on the outer envelope surface (18; 18b) of the first body (14; 14b), which ring (42; 42b) is provided with a radial flange (44; 44b), which flange (44; 44b) extends from the outer envelope surface (18; 18b) of the first body (14; 14b) and substantially most of the way to the inner envelope surface (20; 20b) of the second body (16; 16b) leaving only a narrow gap (46; 46b).

11. Seal arrangement (10) according to claims 3 and 10, whereby the second member (28; 28b) is a cup-shaped ring (48; 48b) radially arranged on the inner envelope surface (20; 20b) of the second body (16; 16b), which cup-shaped ring (48; 48b) has an open side, a cup-shaped portion (50) that is facing towards the flange (44; 44b) of the first member (26; 26b).

12. Seal arrangement (10) according to claim 11, whereby the cup-shaped ring (48) is positioned in the vicinity of the radial flange (44) of the first member (26) in the axial direction leaving a slit (52) between them, and the cup-shaped ring (48) is extending radially from the inner envelope surface (20) of the second body (16) substantially all the way to the ring (42) of the first member (26), leaving only a narrow gap (54).

13. Seal arrangement (10) according to claims 11 and 12, whereby the cup-shaped ring (48; 48b) is provided with a ring portion (55; 55b) in contact with the inner envelope surface (20; 20b) of the second body (16; 16b), which ring portion (55; 55b) is provided with a free end that extends beyond the flange (44; 44b) of the first member (26; 26b) in the axial direction.

14. Seal arrangement (10) according to claim 13, whereby the free end of the ring portion (55; 55b) is provided with a radially extending lip (57).

15. Seal arrangement (10) according to claims 10, whereby the flange (44; 44b) of the first member (26; 26b) is provided with at least one wavelike, annular corrugation (56) facing the cup-shaped portion (50) so that peaks (58) of the corrugation (56) are extending a distance inside the cup-shaped portion (50).

16. Seal arrangement (10) according to claims 10, whereby the flange (44; 44b) of the first member (26; 26b) is provided with at least one peak facing the cup-shaped portion (50), which peak (58) extends a distance inside the cup-shaped portion (50).

17. Seal arrangement (10) according to claim 15, whereby the cup-shaped portion (50) is filled with the semi-solid material so that the wavelike, annular corrugation (56) of the flange (44; 44b) of the first member (26; 26b) forms a corresponding wavelike, annular corrugation (56) in the semi-solid material upon rotating one of the members.

18. Seal arrangement (10) according to claim 16, whereby the cup-shaped portion (50) is filled with the semi-solid material (59) so that the at least one peak on the flange (44; 44b) of the first member (26; 26b) forms a recess in the semi-solid material (59) corresponding to the peak upon rotating one of the members.

19. Seal arrangement (10) according to claim 1, whereby the first and second bodies (14a; 60, 16a; 62) being arranged to form a slot (12a; 64) between them, and which first and second bodies (14a; 60, 16a; 62) are mutually, linearly movable and whereby the first member (26a; 66) of the seal is attached to the first body (14a; 60) and the second member (28a; 68) of the seal is attached to the second body (16a; 62).

20. Seal arrangement (10) according to claim 19, whereby the first body (60) is provided with a groove (70) in a surface facing the second body (62), in which groove (70) the first member (66) of the seal is being positioned, and whereby the second body (62) is provided with a groove (72) in a surface facing the first body (60), in which groove (72) the second member (68) of the seal is being positioned.

21. Seal arrangement (10) according to claim 20, whereby the first member (66) is a U-profile (74) which legs of the U-profile (74) are pressed into the groove (70) of the first body (60), and which U-profile (74) is provided with a wavelike corrugation (78) on the surface facing the second member (68) of the seal, which portion of the first member (66) being provided with the corrugation (78) extends a distance out from the first body (60) towards the second body (62).

22. Seal arrangement (10) according to claim 20, whereby the first member (66) is a U-profile (74) which legs of the U-profile (74) are pressed into the groove (70) of the first body (60), and which U-profile (74) is provided with at least one outwardly directed peak on the surface facing the second member (68) of the seal, which portion of the first member (66) being provided with the at least one peak extends a distance out from the first body (60) towards the second body (62).

23. Seal arrangement (10) according to claim 20, whereby the second member (68) of the seal has a U-profile (80) which is pressed into the groove (72) of the second body (62) with the open portion of the U-profile (80) facing towards the U-profile (74) of the first member (66), and whereby the U-profile (74) of the first member (66) extends a distance into the U-profile (80) of the second member (68) forming a slit (82) between the first and the second members (66, 68).

24. Seal arrangement (10) according to claim 23, whereby the second member (68) is filled with the semi-solid material (83) to such an extent that the wavelike corrugation (78) forms a corresponding wavelike corrugation in the semi-solid material (83) upon moving of one of the members (66, 68).

25. Seal arrangement (10) according to claim 23, whereby the second member (68) is filled with the semi-solid material (83) to such an extent that the at least one peak forms a corresponding recess in the semi-solid material (83) upon moving of one of the members (66, 68).

26. Seal arrangement (10) according to claim 1, whereby the semi-solid material (59; 59a; 83) filled in the labyrinth-formed slit (38; 52; 52a; 82) has a property of releasing a friction reducing substance under influence of the heat, pressure or adherence generated at the mutual movement of the first and second members (26; 26a; 26b; 66, 28; 28a; 28b; 68).
